# EUROPEAN PATENT APPLICATION

(11) **EP 2 843 628 A1**
(43) Date of publication of application: **04.03.2015**
(21) Application number: 13782557.6
(22) Date of filing: 14.03.2013
(51) Int. Cl.: G06T 11/80, H04N 5/225, H04N 5/232

(54) **IMAGE PROCESSING DEVICE, IMAGE PROCESSING METHOD, AND RECORDING MEDIUM**

(30) Priority: 23.04.2012 JP 2012097748
(71) Applicant: Sony Corporation, Tokyo 108-0075 (JP)
(72) Inventor: AKAHO, Kazuki, Tokyo 108-0075 (JP)
(74) Representative: Witte, Weller & Partner Patentanwälte mbB
(86) International application number: PCT/JP2013/057224
(87) International publication number: WO 2013/161424

(57) **Abstract**

Provided is an image processing device including an instruction input acquiring unit configured to acquire an instruction input by a user, a trimming frame setting unit configured to set a trimming frame used to trim an image based on the input instruction, and a detection frame setting unit configured to set a detection frame representing a range in which detection of the image is performed to the trimming frame.

## Description

### Technical Field

The present disclosure relates to an image processing device, an image processing method, and a recording medium.

### Background Art

In the past, a technique of presetting a focus area was disclosed in the following Patent Literature 1. Further, a technique by which a user customizes a trimming frame is disclosed in the following Patent Literature 2.

### Citation List

### Patent Literature

Patent Literature 1: JP 2010-224499A
Patent Literature 2: JP 2006-279661A

### Summary of Invention

### Technical Problem

However, when a captured image is desired to be printed in a size of 203x254 mm or a size of 254x305 mm, it is necessary to trim an image captured at 3:2 or 4:3. At this time, there are cases in which a composition changes and thus it becomes different from a user's image.

In the technique disclosed in Patent Literature 1, customization of a trimming frame is not considered, and it is hard to set a best AF frame position for a composition after trimming. Even in the technique disclosed in Patent Literature 2, it is hard to set a best AF frame position for a composition after trimming.

In this regard, there is a demand for a technique of setting an optimal AF frame position for a customized trimming frame.

### Solution to Problem

An image processing device including an instruction input acquiring unit configured to acquire an instruction input by a user, a trimming frame setting unit configured to set a trimming frame used to trim an image based on the input instruction, and a detection frame setting unit configured to set a detection frame representing a range in which detection of the image is performed to the trimming frame.

The instruction input acquiring unit may be an operation input unit that receives an operation performed by the user.

The instruction input acquiring unit may include a touch panel.

The trimming frame setting unit may set the trimming frame based on a multi-touch operation performed on the touch panel.

The instruction input acquiring unit may be a voice input unit that receives a voice uttered by the user.

The detection frame setting unit may automatically set the detection frame to the trimming frame.

The detection frame setting unit may control the detection frame on the trimming frame based on the input instruction.

Further, a display unit configured to display the trimming frame and the detection frame may be included.

Further, an image sensor configured to photograph the photographed image may be included.

The trimming frame setting unit may control a size or a position of the trimming frame.

The detection frame setting unit may perform a setting of a size or a position of the detection frame or addition or deletion of the detection frame.

The trimming frame setting unit may set an aspect ratio of the trimming frame to a predetermined aspect ratio.

Further, a storage processing unit that causes the confirmed trimming frame and the detection frame to be stored in a storage unit may be included.

The storage processing unit may cause the confirmed trimming frame and the detection frame to be recorded together with a registration name.

According to another embodiment of the present disclosure, there is provided an image processing method including acquiring an instruction input by a user, setting a trimming frame used to trim an image based on the input instruction, and setting a detection frame representing a range in which detection of the image is performed to the trimming frame.

According to another embodiment of the present disclosure, there is provided a computer readable recording medium recording a program causing a computer to execute acquiring an instruction input by a user, setting a trimming frame used to trim an image based on the input instruction, and setting a detection frame representing a range in which detection of the image is performed to the trimming frame.

### Advantageous Effects of Invention

According to the present disclosure, it is possible to set an optimal AF frame position for a customized trimming frame.

### Brief Description of Drawings

[FIG. 1A] FIG. 1A is a schematic diagram illustrating an external appearance of a digital camera according to embodiments.
[FIG. 1B] FIG. 1B is a schematic diagram illustrating an external appearance of a digital camera according to embodiments.
[FIG. 2] FIG. 2 is a block diagram illustrating a configuration of a digital camera.
[FIG. 3A] FIG. 3A is a schematic diagram illustrating a concrete example of an operation after a trimming frame/AF frame setting mode is activated.
[FIG. 3B] FIG. 3B is a schematic diagram illustrating a concrete example of an operation after a trimming frame/AF frame setting mode is activated.
[FIG. 3C] FIG. 3C is a schematic diagram illustrating a concrete example of an operation after a trimming frame/AF frame setting mode is activated.
[FIG. 3D] FIG. 3D is a schematic diagram illustrating a concrete example of an operation after a trimming frame/AF frame setting mode is activated.
[FIG. 3E] FIG. 3E is a schematic diagram illustrating a concrete example of an operation after a trimming frame/AF frame setting mode is activated.
[FIG. 3F] FIG. 3F is a schematic diagram illustrating a concrete example of an operation after a trimming frame/AF frame setting mode is activated.
[FIG. 4A] FIG. 4A is a schematic diagram illustrating a concrete example of an operation of an AF frame.
[FIG. 4B] FIG. 4B is a schematic diagram illustrating a concrete example of an operation of an AF frame.
[FIG. 4C] FIG. 4C is a schematic diagram illustrating a concrete example of an operation of an AF frame.
[FIG. 4D] FIG. 4D is a schematic diagram illustrating a concrete example of an operation of an AF frame.
[FIG. 4E] FIG. 4E is a schematic diagram illustrating a concrete example of an operation of an AF frame.
[FIG. 4F] FIG. 4F is a schematic diagram illustrating a concrete example of an operation of an AF frame.
[FIG. 4G] FIG. 4G is a schematic diagram illustrating a concrete example of an operation of an AF frame.
[FIG. 5A] FIG. 5A is a flowchart illustrating a process according to a first embodiment.
[FIG. 5B] FIG. 5B is a flowchart illustrating a process according to a first embodiment.
[FIG. 5C] FIG. 5C is a flowchart illustrating a process according to a first embodiment.
[FIG. 5D] FIG. 5D is a flowchart illustrating a process according to a first embodiment.
[FIG. 5E] FIG. 5E is a flowchart illustrating a process according to a first embodiment.
[FIG. 5F] FIG. 5F is a flowchart illustrating a process according to a first embodiment.
[FIG. 6A] FIG. 6A is a schematic diagram illustrating a concrete example of an operation after a trimming frame/AF frame setting mode is activated.
[FIG. 6B] FIG. 6B is a schematic diagram illustrating a concrete example of an operation after a trimming frame/AF frame setting mode is activated.
[FIG. 6C] FIG. 6C is a schematic diagram illustrating a concrete example of an operation after a trimming frame/AF frame setting mode is activated.
[FIG. 6D] FIG. 6D is a schematic diagram illustrating a concrete example of an operation after a trimming frame/AF frame setting mode is activated.
[FIG. 6E] FIG. 6E is a schematic diagram illustrating a concrete example of an operation after a trimming frame/AF frame setting mode is activated.
[FIG. 6F] FIG. 6F is a schematic diagram illustrating a concrete example of an operation after a trimming frame/AF frame setting mode is activated.
[FIG. 7A] FIG. 7A is a schematic diagram illustrating a concrete example of an operation of an AF frame.
[FIG. 7B] FIG. 7B is a schematic diagram illustrating a concrete example of an operation of an AF frame.
[FIG. 7C] FIG. 7C is a schematic diagram illustrating a concrete example of an operation of an AF frame.
[FIG. 7D] FIG. 7D is a schematic diagram illustrating a concrete example of an operation of an AF frame.
[FIG. 7E] FIG. 7E is a schematic diagram illustrating a concrete example of an operation of an AF frame.
[FIG. 7F] FIG. 7F is a schematic diagram illustrating a concrete example of an operation of an AF frame.
[FIG. 7G] FIG. 7G is a schematic diagram illustrating a concrete example of an operation of an AF frame.
[FIG. 7H] FIG. 7H is a schematic diagram illustrating a concrete example of an operation of an AF frame.
[FIG. 8A] FIG. 8A is a flowchart illustrating a process according to a first embodiment.
[FIG. 8B] FIG. 8B is a flowchart illustrating a process according to a first embodiment.
[FIG. 8C] FIG. 8C is a flowchart illustrating a process according to a first embodiment.
[FIG. 8D] FIG. 8D is a flowchart illustrating a process according to a first embodiment.
[FIG. 8E] FIG. 8E is a flowchart illustrating a process according to a first embodiment.
[FIG. 9A] FIG. 9A is a schematic diagram illustrating an exemplary configuration according to a third embodiment.
[FIG. 9B] FIG. 9B is a schematic diagram illustrating an exemplary configuration according to a third embodiment.

### Description of Embodiments

Hereinafter, preferred embodiments of the present invention will be described in detail with reference to the appended drawings. Note that, in this specification and the drawings, elements that have substantially the same function and structure are denoted with the same reference signs, and repeated explanation is omitted.

The description will proceed in the following order.
1. First embodiment
   1.1. Exemplary configuration of digital camera
   1.2. Concrete example of method of customizing and setting trimming frame and AF frame
   1.3. Process according to first embodiment
   1.4. AF when shooting is performed using customized trimming frame and AF frame
   1.5. Reproduction of image data captured using trimming frame and AF frame customized by user
2. Second embodiment
   2.1. Concrete example of method of customizing and setting trimming frame and AF frame
   2.2. Process according to second embodiment
   3. Third embodiment

### <1. First embodiment>

### [1.1. Exemplary configuration of digital camera]

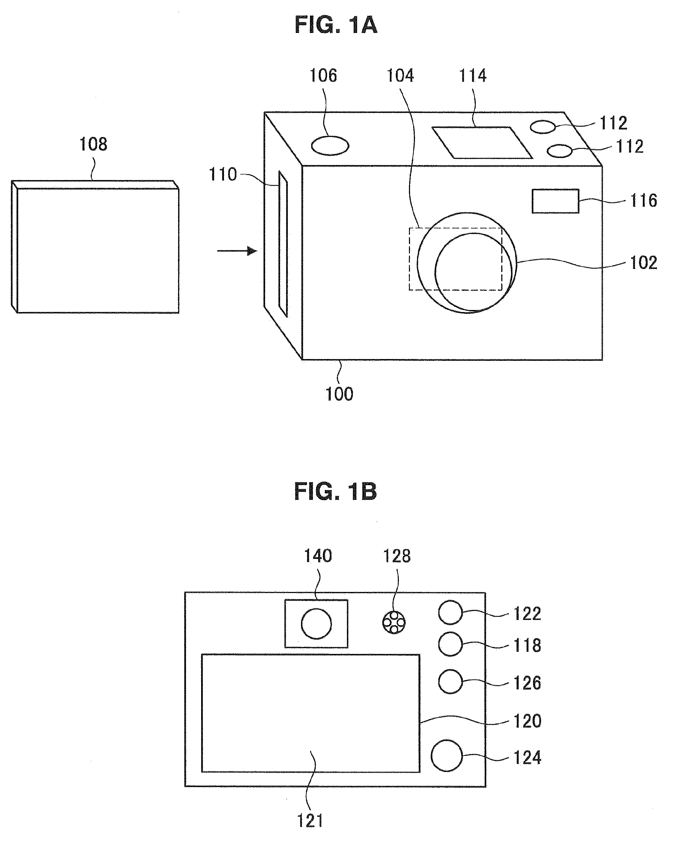

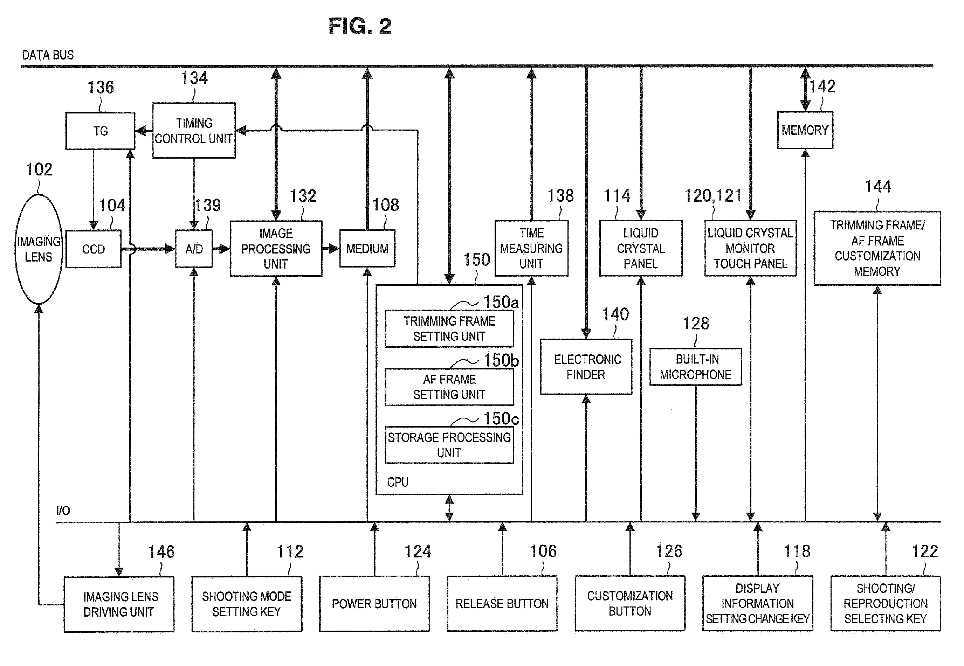

First, a schematic configuration of a digital camera (image processing device) 100 according to embodiments of the present disclosure will be described with reference to FIGS. 1A, 1B, and 2. FIGS. 1A and 1B are schematic diagrams illustrating an external appearance of the digital camera 100. FIG. 1A illustrates a state in which the digital camera 100 is viewed from the front, and FIG. 1B illustrates a state in which the digital camera 100 is viewed from the back. As illustrated in FIG. 1A, the digital camera 100 is configured to include an imaging lens 102, an image sensor 104, a release button 106, an insertion slot 110 for a recording medium 108, a shooting mode setting key 112, a liquid crystal panel 114, and a focusing window 116. As illustrated in FIG. 1B, the digital camera 100 is configured to further include a display information setting change key 118, a liquid crystal monitor 120 for live view display, a touch panel 121 installed on a display screen of the liquid crystal monitor 120, a shooting/reproduction selecting key 122, a power button 124, a trimming frame/AF frame customization button 126, a built-in microphone 128, and an electronic finder 140.

The user can perform setting of an exposure condition of giving a priority to a diaphragm or a shutter speed, switching of a macro shooting, setting of a zoom, or the like in conjunction with a display of the liquid crystal panel 114 by operating the shooting mode setting key 112. Further, when the user presses the information display setting change key 118, an information display form is changed.

Further, when the user presses the trimming frame/AF frame customization button 126, a mode in which a trimming frame or an AF frame is customized is activated. The built-in microphone 128 has a function of implementing voice recognition.

FIG. 2 is a block diagram illustrating a configuration of the digital camera 100. As illustrated in FIG. 2, the digital camera 100 is configured to include the imaging lens 102, the image sensor (a CCD sensor, a CMOS sensor, or the like) 104, an A/D converting unit 130, an image processing unit 132, the recording medium 108, a CPU 150, a timing control unit 134, a timing generator (TG) 136, a time measuring unit 138, an electronic finder 140, the liquid crystal panel 114, the built-in microphone 128, the liquid crystal monitor 120, the touch panel 121, a memory 142, a customization memory 144, an imaging lens driving unit 146, the shooting mode setting key 112, the release button 106, and the display information setting change key 118. As the touch panel 121, for example, a capacitive sensor that detects an operation based on capacitance, a pressure sensor that detects an operation based on pressing force, or the like may be used.

In FIG. 2, arrows of fine lines indicate the flow of control data, and arrows of thick lines indicate the flow of image data. The flow of shooting and reproduction will be described below with reference to FIG. 2. Before shooting, the user selects a shooting state or a reproduction state using the shooting/reproduction selecting key 122 and the liquid crystal monitor 120. The setting content is as follows.

When the shooting/reproduction selecting key 122 is in an on state, that is, when the reproduction state is set, the CPU 150 performs control such that image data is read from the recording medium 108 and stored in the memory 142. The CPU 150 performs control such that the image data stored in the memory 142 is transferred to the image processing unit 132. The image processing unit 132 processes the transferred image data to have a format that can be displayed by the liquid crystal monitor 120 or the electronic finder 140 based on control of the CPU 150, and transfers the processed data to the liquid crystal monitor 120 or the electronic finder 140. The liquid crystal monitor 120 includes the touch panel 121, and thus it is possible to operate the digital camera 100 by performing a touch operation of touching the liquid crystal monitor 120.

When the shooting/reproduction selecting key 122 is in an off state, that is, when the shooting state is set, the user can manually set setting of an exposure condition of giving a priority to a diaphragm or a shutter speed, switching of a white balance mode, or the like using the shooting mode setting key 112 and the liquid crystal monitor 120.

When the release button 106 is pressed, the digital camera 100 performs shooting based on the set shooting condition and a setting of the image processing mode. In other words, the imaging lens driving unit 146 drives the imaging lens 102 to focus on an appropriate subject, and reads image data from the image sensor (a CCD sensor, a CMOS sensor, or the like) 104.

In other words, the CPU 150 performs control such that driving mode information of the image sensor 104 is transferred to the timing generator (TG) 136, and the image sensor 104 is driven in a designated mode. Further, the CPU 150 performs control such that a setting of ISO sensitivity or gain adjustment information is transferred to the A/D converting unit 130, and A/D conversion is performed as designated.

The read image data is converted into digital data according to the designated ISO sensitivity or the gain by the A/D converting unit 130. The A/D converting unit 130 converts image data into digital data based on timing pulses generated by the timing control unit 134.

Further, the image processing unit 132 performs, for example, gain processing or image processing such as color shading correction using a shading table, and causes the processed image data to be recorded in the recording medium 108.

When the trimming frame/AF frame customization button 126 is pressed, the CPU 150 recognizes a mode of customizing a trimming frame and an AF frame, and performs control such that detection data transferred from the touch panel 121 of the liquid crystal monitor 120 or a voice transferred from the built-in microphone 128 are recognized, and a trimming frame and an AF frame are customized. Content obtained by customizing a trimming frame and an AF frame is stored in the customization memory 144.

Specifically, the CPU 150 is configured to include a trimming frame setting unit 150a, an AF frame setting unit 150b, and a storage processing unit 150c. The trimming frame setting unit 150a sets, for example, a size and a position of a trimming frame used to trim a photographed image based on an operation input through the touch panel 121 or a voice input through the built-in microphone 128. The AF frame control unit 150b automatically or manually sets an AF frame to the set trimming frame. When the AF frame is set based on the user's instruction, the AF frame control unit 150b controls a setting of a size and a position of an AF frame representing a range in which auto focus of a photographed image is performed, or a setting of addition or deletion of an AF frame based on an operation input through the touch panel 121 or a voice input through the built-in microphone 128. The recording processing unit 150c causes content (including a position, a size, and a registration name) obtained by customizing the trimming frame and the AF frame to be stored in the customization memory 144.

The configurations of the trimming frame setting unit 150a, the AF frame setting unit 150b, and the storage processing unit 150c may be implemented by the CPU 150 and a program (software) operating the CPU 150. In this case, the program may be recorded in the memory 142 or a recording medium such as the recording medium 108 that is inserted from the outside.

The present embodiment will be described in connection with an example in which an AF frame is set, but the present disclosure is not limited to this example. The present embodiment can be widely applied when a detection frame representing a range in which detection of data (for example, brightness, a hue, a white balance value, or the like) related to an image is performed is set to a trimming frame, and an AF frame is an example of a detection frame.

### [1.2. Concrete example of method of customizing and setting trimming frame and AF frame]

The liquid crystal monitor 120 arranged on the back side of the digital camera 100 includes the touch panel 121, and thus the user can easily arrange a trimming frame or an AF frame by an operation using his/her finger. The following description will proceed with an example in which a trimming frame or an AF frame is arranged by an operation of touching the touch panel 121, but a similar operation can be performed by an operation of bringing a finger close to the touch panel 121 instead of touching it. Further, it is possible to input a different operation according to pressing force against the touch panel 121.

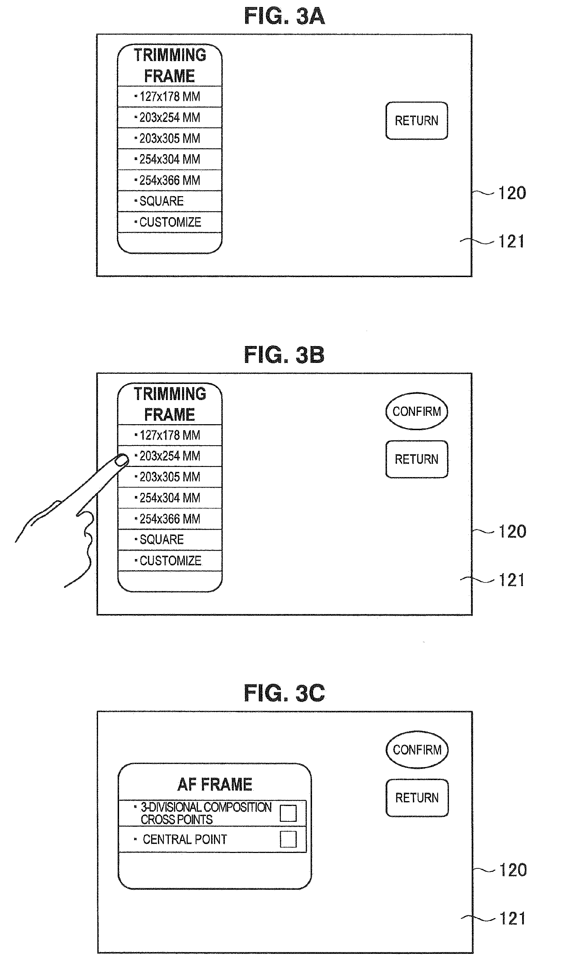

FIGS. 3A to 3F illustrate concrete examples of an operation after a trimming frame/AF frame setting mode is activated. When the trimming frame/AF frame customization button 126 is pressed, screens illustrated FIGS. 3A to 3F are sequentially displayed.

When the trimming frame/AF frame customization button 126 is pressed, first, items used to decide an aspect ratio of a trimming frame are shown as illustrated in FIG. 3A. Here, the aspect ratios such as 127x178 mm, 203x254 mm, 203x305 mm, 254x304 mm, 254x366 mm, a square, and custom which are usually used in photograph development are displayed, and the user can select a desired aspect ratio from among the displayed aspect ratios as illustrated in FIG. 3B.

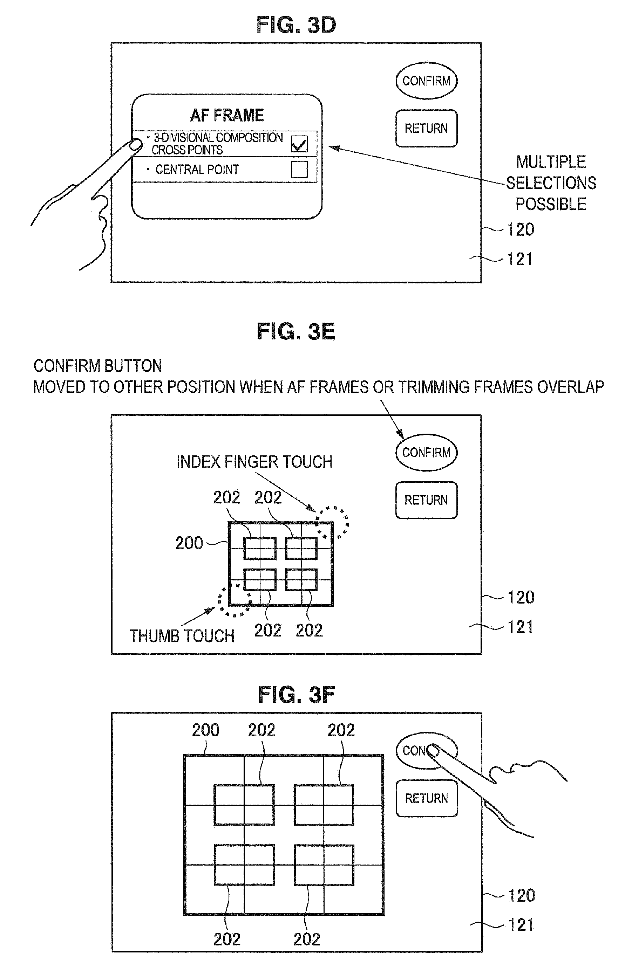

In this example, the user is assumed to have selected the size of 203x254 mm. The user decides the aspect ratio (the size of 203x254 mm) of the trimming frame, and touches a "confirm" button as illustrated in FIG. 3B. Then, AF frame arrangement items are displayed as illustrated in FIG. 3C. The user can select a desired item from among the items used to arrange the AF frame as illustrated in FIG. 3D.

In this example, the user is assumed to have selected an item "3-divisional composition cross points." The user can select a plurality of items. When the user touches an item in a column below the AF frame at the time of selection, the corresponding item is ticked and selected. When the user touches the corresponding item again, the tick is erased, and the selection is canceled.

When the user selects the AF frame arrangement item and touches the "confirm" button as illustrated in FIG. 3D, a trimming frame 200 and AF frames 202 that have been confirmed are displayed as illustrated in FIG. 3E. The aspect ratio of the trimming frame 200 corresponds to 203x254 mm selected in FIG. 3B, and the AF frames 202 are arranged at cross points of a 3-divisional composition in the trimming frame 200.

The size of the trimming frame 200 illustrated in FIG. 3E can be freely changed, for example, by a multi-touch operation of simultaneously touching a lower left corner and an upper right corner with a thumb and an index finger on the touch panel 121. Further, it is possible to change the position of the trimming frame 200 by sliding a finger. Further, the size or the position of the trimming frame 200 can be freely changed, but the aspect ratio is maintained at the size of 203x254 mm that has already been selected. Further, when the size or the position of the trimming frame 200 is changed, the positions of the AF frames 202 are adjusted so that the AF frames 202 are positioned at the 3-divisional composition cross points of the changed trimming frame 200.

The operation of simultaneously touching with the index finger and the thumb has been described herein as an example, and it is possible to perform an operation using a single finger. For example, the size or the position of the trimming frame 200 may be changed by determining an operation of moving the trimming frame 200 when the user touches the inside of the trimming frame 200 rather than the corner of the trimming frame 200 and determining an operation of changing the size of the trimming frame 200 when the user touches the corner of the trimming frame 200. Further, the position operated with the finger is not limited to the lower left corner or the upper right corner of the trimming frame 200. For example, the size or the position may also be changed when the upper left corner of the trimming frame 200 is touched or when the lower right corner of the trimming frame 200 is touched.

After the position and the size of the trimming frame 200 are changed to desired ones, the user presses the "confirm" button as illustrated in FIG. 3F. When the "confirm" button is pressed, the position and the size of the trimming frame 200 are confirmed. In the following steps, a setting of an AF frame is performed.

When the position and the size of the trimming frame 200 are confirmed as illustrated in FIG. 3F, an operation on the AF frame 202 is performed as a next step. In this example, the AF frames 202 are automatically arranged at cross points at which the trimming frame 200 is divided into three based on the user's selection. For an arrangement of the AF frames 202, the user can add, delete, or move the AF frame 202.

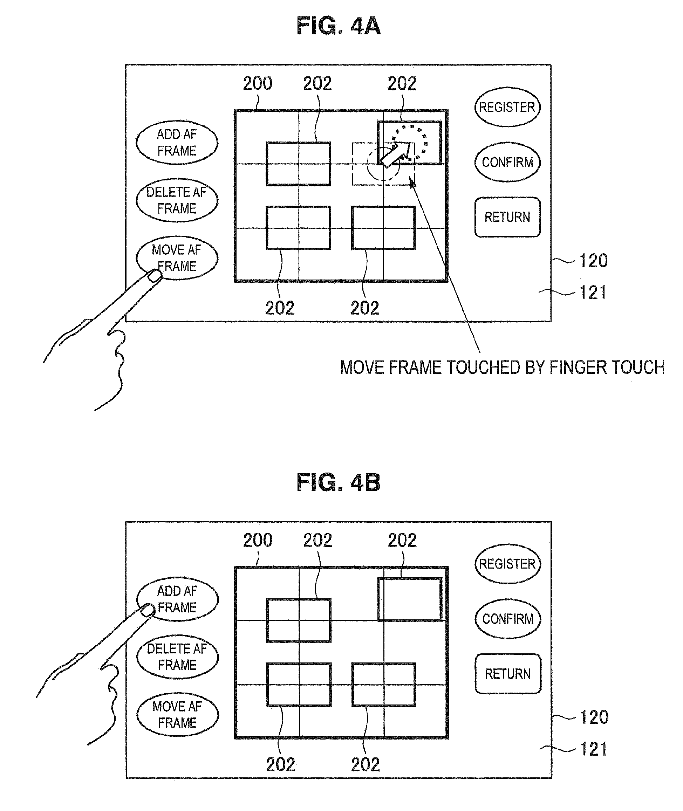

When the user desires to move the AF frame 202, first, the user touches "move AF frame move" button as illustrated in FIG. 4A. Thereafter, the user touches the inside of the AF frame 202 that he/she desires to move, and moves the AF frame 202 to a desired position. When the moving is completed and the user presses the "confirm" button, the moved position is decided as the position of the AF frame 202.

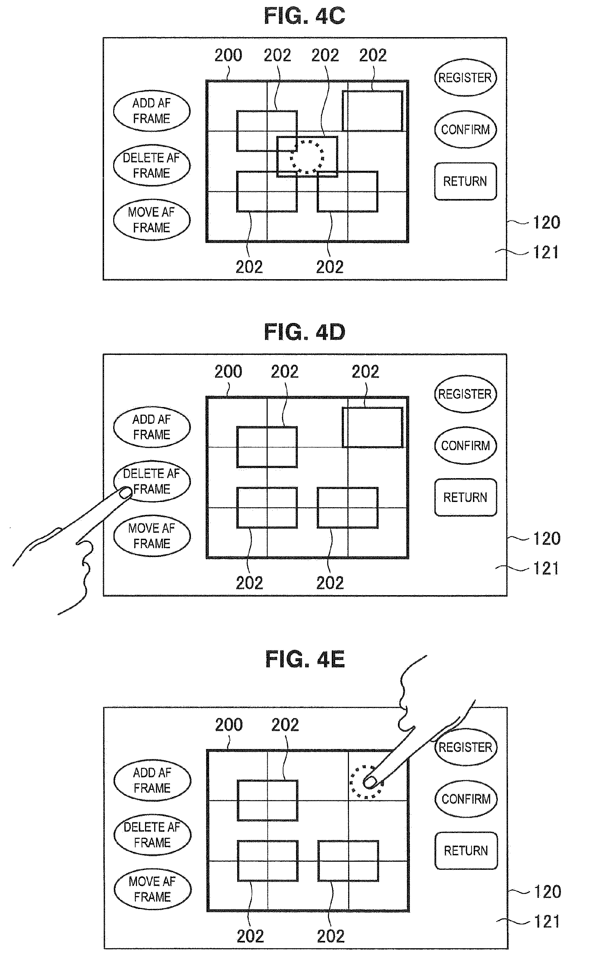

When the user desires to add the AF frame 202, the user touches an "add AF frame" button as illustrated in FIG. 4B. As a result, for example, the AF frame 202 is added to the center as illustrated in FIG. 4C. The added AF frame 202 can be moved by the above-described method.

When the user desires to delete the AF frame 202, the user first touches a "delete AF frame" button as illustrated in FIG. 4D. Then, the user touches the inside of the AF frame 202 that he/she desires to delete as illustrated in FIG. 4E, and thus the touched AF frame 202 at the upper right is deleted.

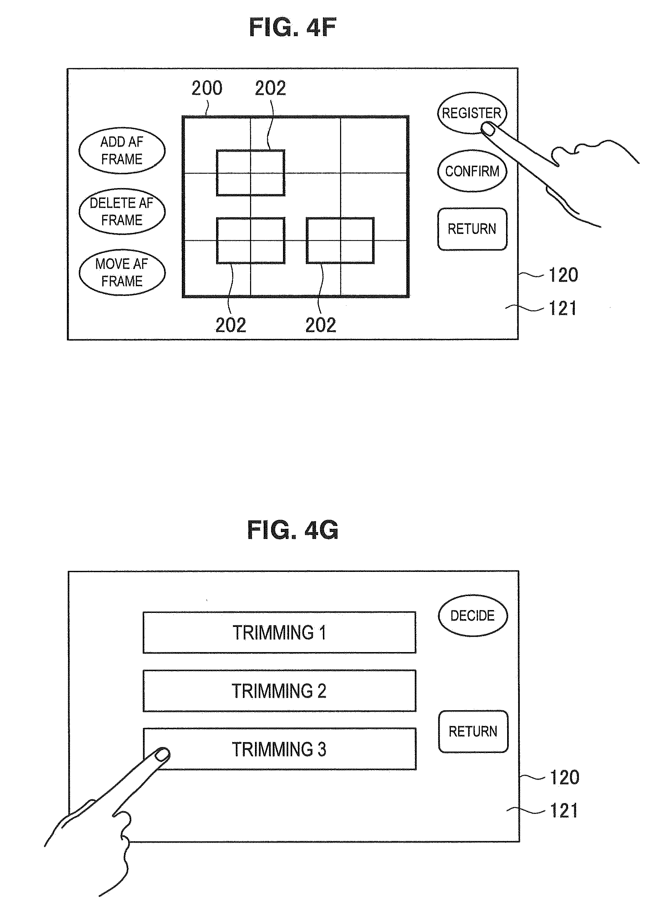

When the user moves, adds, or deletes the AF frame 202 and then desires to confirm a desired arrangement of the AF frames 202, the user touches a registration button as illustrated in FIG. 4F. As a result, a screen used to select a registration name for the set trimming frame 200 and the arrangement of the AF frames 202 is displayed as illustrated in FIG. 4G. Further, although 3 registration names are illustrated in FIG. 4G, the number of registration names is not limited to 3.

When the user touches a desired registration name and then touches a "decide" button, setting content of the trimming frame 200 and the AF frames 202 is registered under a desired registration name. FIG. 4G illustrates an example in which "trimming3" is selected as a registration name.

### [1.3. Process according to first embodiment]

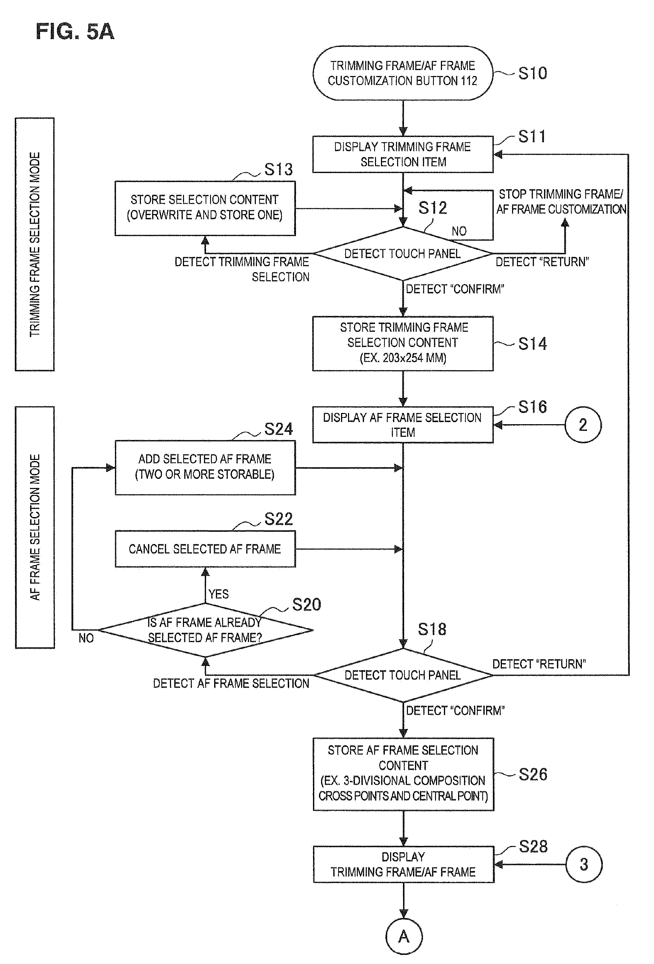

Next, a process according to the present embodiment will be described. FIGS. 5A to 5D are flowcharts illustrating a process according to the present embodiment. As illustrated in FIG. 5A, in step S10, the customization button 126 is pressed, and the process proceeds to the customization mode. In step S11, a trimming frame selection item is displayed. When it is determined in step S12 that an operation on the touch panel 121 is detected and a "return" operation is detected, a customization process ends. When selection of the trimming frame is detected in step S12, the process proceeds to step S13, one piece of selection content is overwritten and stored in the memory 142. Further, when an operation on the "confirm" button is detected in step S12, the process proceeds to step S14. In step S14, selection content of the trimming frame 200 is stored. For example, when "203x254 mm" is selected as the trimming frame, the corresponding selection content is stored.

Then, in step S16, an AF frame selection item is displayed. When it is determined in step S18 that an operation on the touch panel 121 is detected and the "return" operation is detected, the process returns to step S11. Further, when selection of the AF frame is detected in step S18, the process proceeds to step S20, and it is determined whether or not the selected AF frame is an already selected AF frame. When the selected AF frame is determined to be an already selected AF frame, the process proceeds to step S22, and the selected AF frame is canceled. Further, when the selected AF frame is determined not to be an already selected AF frame in step S20, the process proceeds to step S24, and the selected AF frame is added and stored. As described above, a plurality of AF frames can be selected.

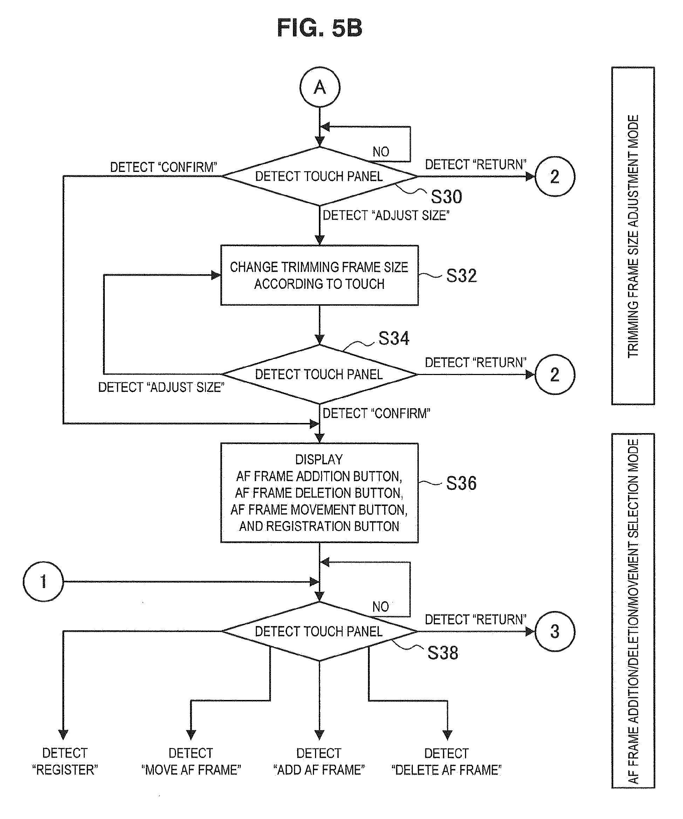

When an operation on the "confirm" button is detected in step S18, the process proceeds to step S26. In step S26, selection content of the AF frame is stored. For example, the 3-divisional composition cross points and a central point are stored as the selection content of the AF frame. In step S28, the confirmed trimming frame and the AF frame are displayed. After step S28, the process proceeds to step S30 of FIG. 5B.

When it is determined in step S30 that an operation on the touch panel 121 is detected and the "return" operation is detected, the process returns to step S16 of FIG. 5A. When an operation on the touch panel 121 is not detected, a standby operation is performed in step S30. When a size adjustment operation is detected in step S30, the process proceeds to step S32.

In step S32, the size of the trimming frame is changed according to a touch operation. When it is determined in step S34 that an operation on the touch panel 121 is detected and the "return" operation is detected, the process returns to step S16 of FIG. 5A. Further, when the size adjustment operation is detected in step S34, the process returns to step S32, and the size of the trimming frame is changed according to a touch operation. Further, when an operation on the "confirm" button is detected in step S34, the process proceeds to step S36. In step S36, an AF frame addition button, an AF frame deletion button, an AF frame movement button, and a registration button are displayed.

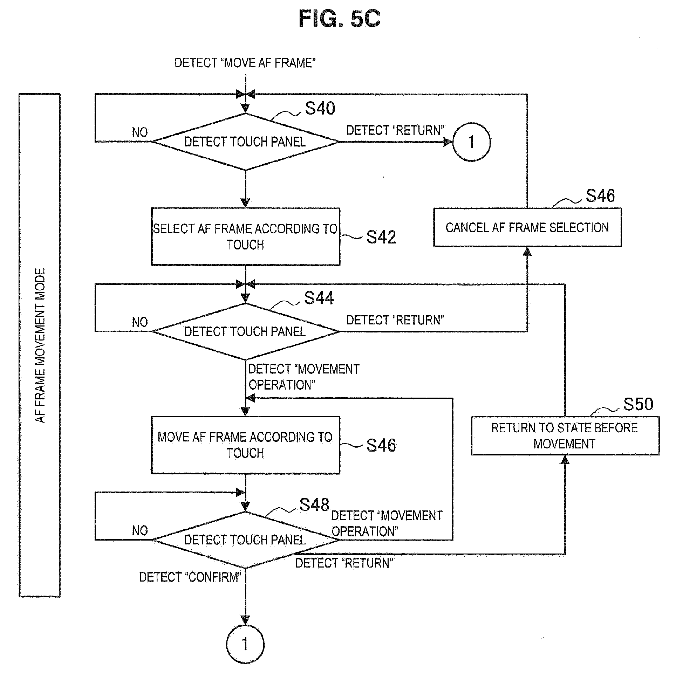

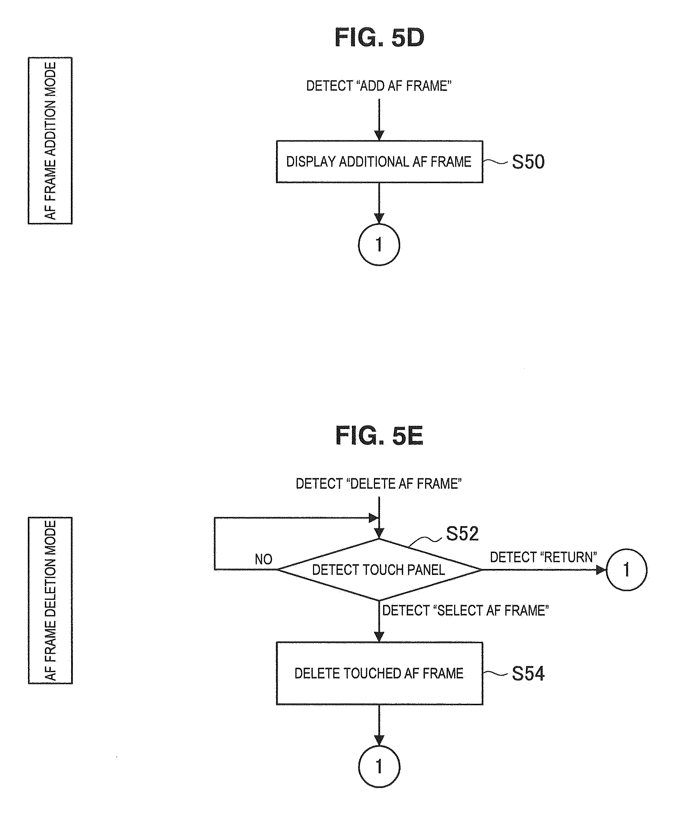

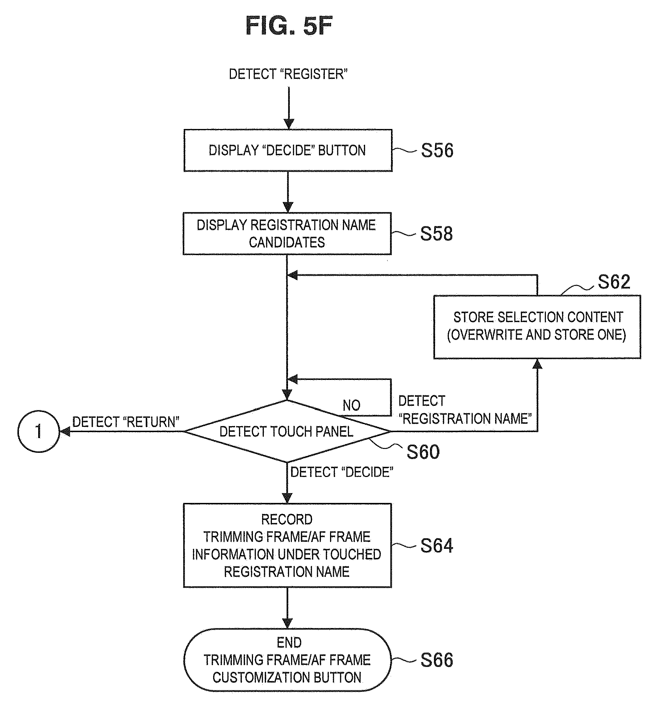

In step S38, an operation on the touch panel 121 is detected, and the process of FIG. 5C, FIG. 5D, FIG. 5E, and FIG. 5F is performed according to an operation on the touch panel 121.

When an operation on the "move AF frame" button is detected in step S38, the process proceeds to step S40 of FIG. 5C. When it is determined in step S40 that an operation on the touch panel 121 is detected and the "return" operation is detected, the process returns to step S38 of FIG. 5B. Further, when an operation on the touch panel 121 is not detected, a standby operation is performed in step S40. Further, when an operation of moving the AF frame is performed in step S40, the process proceeds to step S42, and the AF frame is selected according to an operation on the touch panel 121.

After step S42, the process proceeds to step S44. When it is determined in step S44 that an operation on the touch panel 121 is detected and the "return" operation is detected, the process proceeds to step S46, selection of the AF frame is canceled, and then the process returns to step S40. Meanwhile, when an operation of moving the AF frame is detected in step S44, the process proceeds to step S46. In step S46, the AF frame is moved according to an operation on the touch panel 121.

After step S46, the process proceeds to step S48. When it is determined in step S48 that an operation on the touch panel 121 is detected and the "return" operation is detected, the process proceeds to step S50, an operation of returning to a state before the AF frame was moved is performed, and the process returns to step S44.

Further, when an operation of moving the AF frame is detected in step S48, the process returns to step S46, and the AF frame is moved according to an operation on the touch panel 121. Further, when the "confirm" operation is detected in step S48, the process returns to step S38 of FIG. 5B. However, when an operation on the touch panel 121 is not detected in step S48, a standby operation is performed in step S48.

Further, when an operation on the "add AF frame" button is detected in step S38 of FIG. 5B, the process proceeds to step S50 of FIG. 5D. In step S50, an additional AF frame is displayed. After step S50, the process returns to step S38 of FIG. 5B.

Further, when an operation on the "delete AF frame" button is detected in step S38 of FIG. 5B, the process proceeds to step S52 of FIG. 5E. When it is determined in step S52 that an operation on the touch panel 121 is detected and the "return" operation is detected, the process returns to step S38 of FIG. 5B. However, when an operation on the touch panel 121 is not detected, a standby operation is performed in step S52. Further, when an operation of selecting the AF frame is performed in step S52, the process proceeds to step S54, and the selected AF frame is deleted according to an operation on the touch panel 121. After step S54, the process returns to step S38 of FIG. 5B.

Further, when an operation on the "register" button is detected in step S38 of FIG. 5B, the process proceeds to step S56 of FIG. 5F. The "decide" button is displayed in step S56, and then registration name candidates are displayed in step S58. Then, when it is determined in step S60 that an operation on the touch panel 121 is detected and the "return" operation is detected, the process returns to step S38 of FIG. 5B. Further, when an operation on the touch panel 121 is not detected, a standby operation is performed in step S60. Further, when the selected registration name is detected in step S60, the process proceeds to step S62, and selection content is stored. One selected registration name is overwritten and stored.

Further, when an operation on the "decide" button is detected in step S60, the process proceeds to step S64. In step S64, the trimming frame and the AF frame are recorded under the touched registration name, that is, the registration name stored in step S62. After step S64, the process proceeds to step S66. In step S66, the customizing of the trimming frame and the AF frame ends.

### [1.4. AF when shooting is performed using customized trimming frame and AF frame]

Next, a shooting operation when the trimming frame and the AF frame are customized by the above-described method will be described. When the user selects a local AF, the AF frame is selected from the AF frames in the set trimming frame. Further, when a wide area AF is selected, a wide area auto focus process is performed using the AF frame set by the user in addition to the AF frames in the trimming frame among the AF frames originally arranged in the digital camera 100.

Further, the auto focus may be performed using only the AF frame set by the user. In this case, since an AF calculation is performed at only a position necessary for the user, focusing can be performed at a position desired by the user.

### [1.5. Reproduction of image data captured using trimming frame and AF frame customized by user]

When shooting is performed using the trimming frame and the AF frame customized by the user, the digital camera 100 can record size and position information of the trimming frame together with all image data photographed by the image sensor 104. Further, the digital camera 100 may perform a trimming process on all image data photographed by the image sensor 104 using the trimming frame and record resultant data in a medium. The digital camera 100 may be set so that any of them can be selected. When image data that has been actually subjected to the trimming process in the digital camera 100 is recorded in a medium, more image data can be recorded.

When reproduction is performed in a personal computer (PC) after shooting, development software is activated. In the case of an image captured using the customized trimming frame and the AF frame, trimming information may be acquired, and the trimming frame may be displayed at the time of reproduction on a PC. The trimming process may be performed according to the trimming frame.

According to the present embodiment described above, when it is desired to print at a size of 203x254 mm or 254x304 mm, a trimming frame of an aspect ratio desired by the user can be displayed on a live view of a display having an aspect ratio of 3:2 or 4:3. Thus, the user can set a composition with a higher degree of accuracy than when the user performs shooting while imagining the trimming frame.

Further, since both a trimming frame and an AF frame can be customized, it is possible to set a trimming frame and then set an AF frame desired by the user for the trimming frame. Accordingly, the user can image a position of an AF frame on a trimming frame and accurately set an AF frame position on a trimmed image.

Further, since both a trimming frame and an AF frame can be customized, an AF frame appropriate for a desired trimming frame can be arranged. Thus, it is possible to obtain an image optimal for the user in terms of a composition and a focus position on a trimmed image.

Further, since a trimming frame is set and image data other than the trimming frame is not recorded, a data amount of an image can be reduced, and the number of records can be increased.

Further, as a trimming frame has an aspect ratio in which a vertical length is larger than a horizontal length, an image captured at a vertical position can be obtained after trimming. Further, an AF frame can be set at a position optimal for the user on a vertical position trimming frame. Accordingly, without using a special tool such as a vertical position grip, a unique shooting style in which a camera is held at a vertical position can be avoided, and a vertical position image can be obtained in a horizontal position shooting style in which a camera is easily made horizontal.

### <2. Second embodiment>

### [2.1. Concrete example of method of customizing and setting trimming frame and AF frame]

Next, a second embodiment of the present disclosure will be described. In the second embodiment, flexibility of an operation is increased by a combination of a touch panel operation and voice recognition. Similarly to the first embodiment, the liquid crystal monitor 120 arranged on the back of the digital camera 100 includes the touch panel 121, and the trimming frame 200 and the AF frame 202 can be easily arranged by an operation performed with the user's finger. In the second embodiment, the trimming frame 200 and the AF frame 202 are set by also using voice recognition performed by the built-in microphone 128.

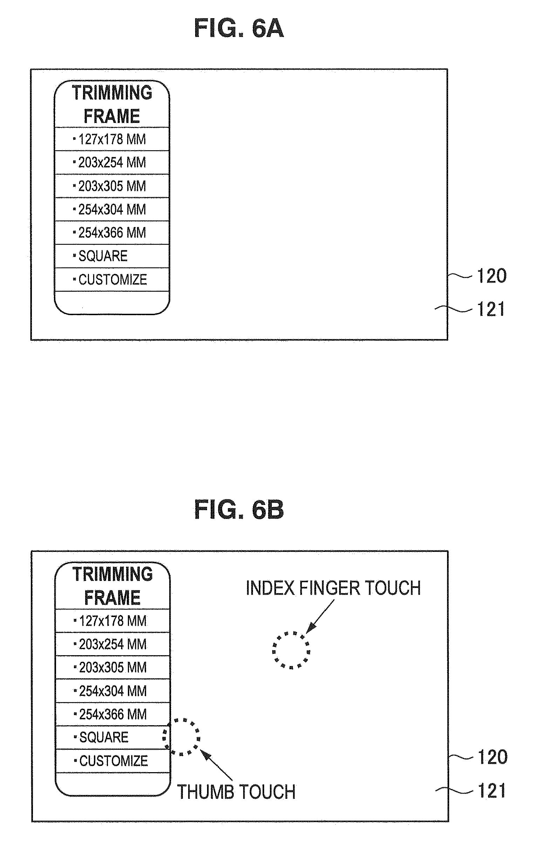

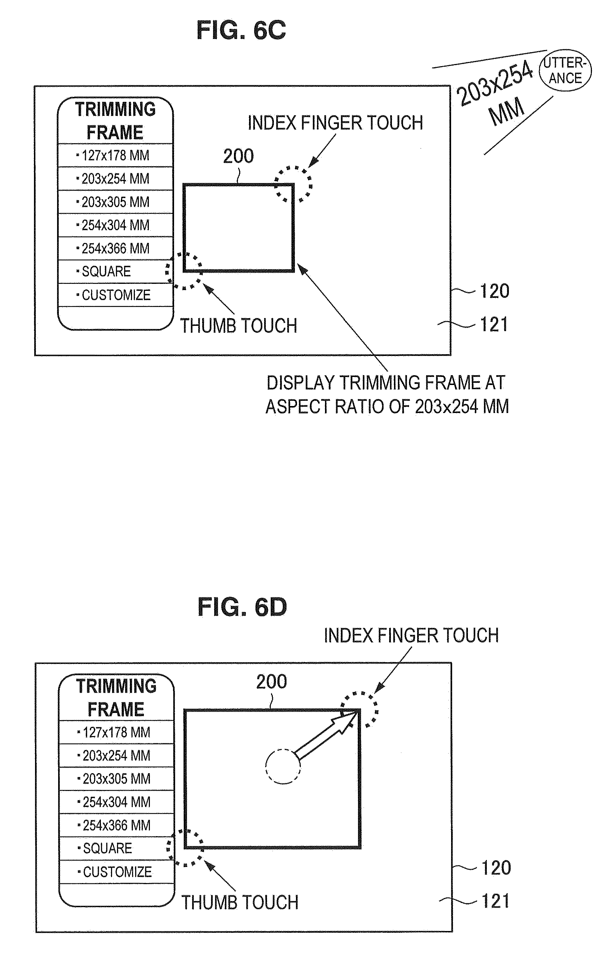

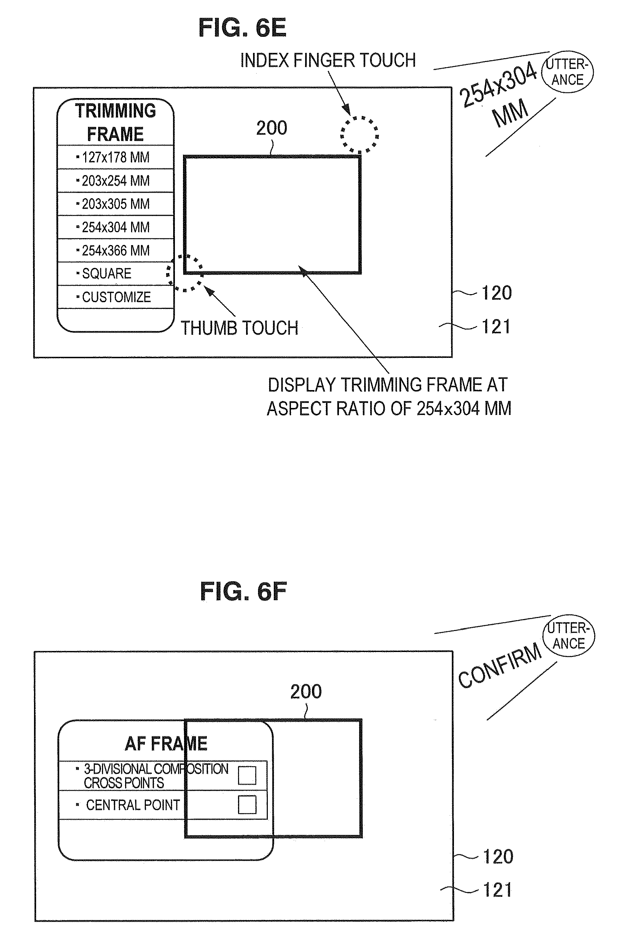

FIGS. 6A to 6F illustrate a concrete example of an operation after the setting mode for setting the trimming frame 200 and the AF frame 202 is activated. When the trimming frame/AF frame customization button 126 is pressed, for example, a display illustrated in FIG. 6A is shown. In this state, the user touches the touch panel 121 using his/her index finger and thumb as illustrated in FIG. 6B. Then, when the user utters "203x254 mm" toward the digital camera 100 as illustrated in FIG. 6C, a trimming frame 200 having an aspect ratio of 203:254 of a size of 203x254 mm is displayed. The trimming frame 200 is displayed such that positions of the trimming frame 200 touched by the index finger and the thumb are diagonal. The user can adjust the size and the position of the trimming frame 200 by moving the fingers as illustrated in FIG. 6D. Further, when "254x304 mm" is uttered as illustrated in FIG. 6E while the size and the position of the trimming frame 200 are being adjusted, the trimming frame can be changed to a trimming frame 200 having an aspect ratio of 254:304 of a size of 254x304 mm. Even when the trimming frame has been changed, positions being touched by the index finger and the thumb are displayed in a form close to a diagonal. Then, as the user decides the size and the position of the trimming frame 200 and then utters "confirm" as illustrated in FIG. 6F, the size and the position of the trimming frame 200 are confirmed.

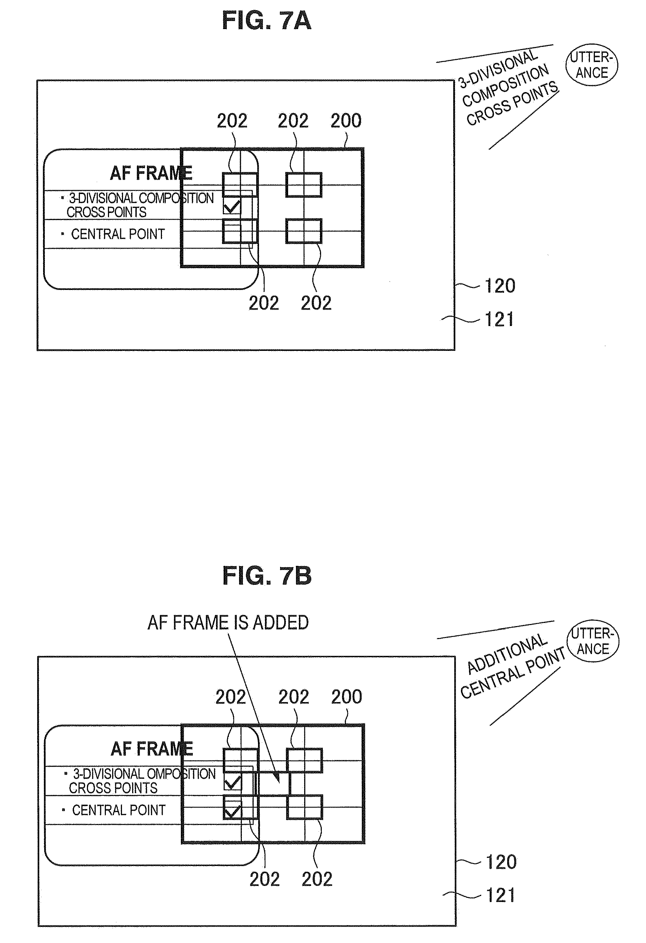

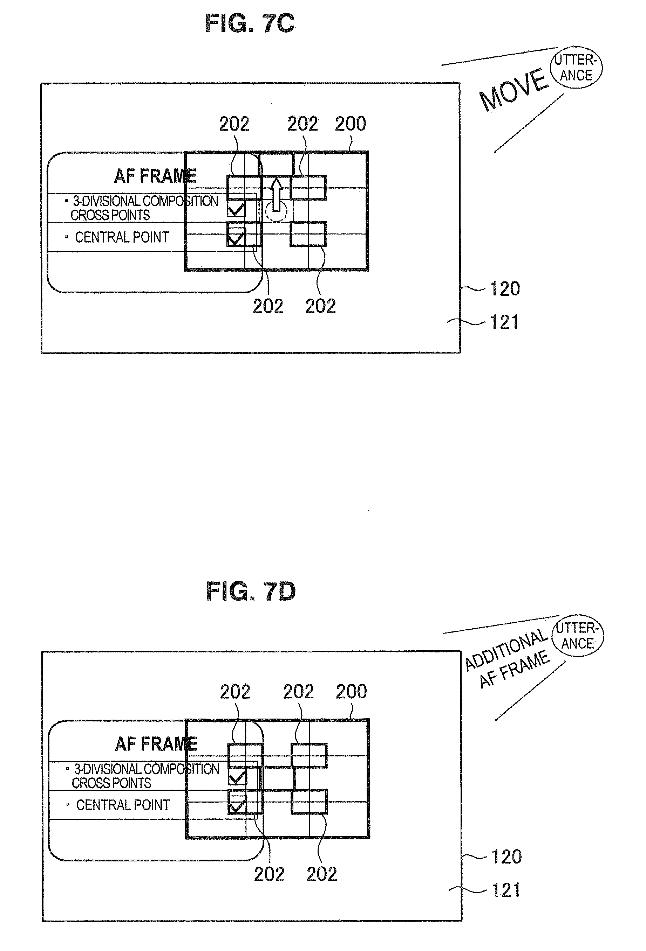

In the second embodiment, the AF frame 202 can also be set using a voice. For example, when the user utters "3-divisional composition cross points" toward the digital camera 100 as illustrated in FIG. 7A, the AF frames 202 are displayed on the cross points at which the trimming frame 200 is divided into 3. When the user desires to add the AF frame 202, he/she utters "add" as illustrated in FIG. 7B to activate the mode of adding the AF frame 202, and then when the user utters "central point," the AF frame 202 is added to the central point of the trimming frame 200. When the user desires to move the AF frame 202, he/she utters "move" as illustrated in FIG. 7C to activate the mode of moving the AF frame 202, and can touch the AF frame 202 that he/she desires to move and move the corresponding AF frame 202 to a desired position. FIG. 7C illustrates an example of selecting and moving the added AF frame 202, but it is possible to move the AF frames 202 on the 3-divisional composition cross points as well. Furthermore, when the user desires to add the AF frame 202, he/she may utter "add."

The AF frame 202 can be added one by one. For example, when "add" is uttered in the state illustrated in FIG. 7A, the addition mode is activated, and then when "AF frame" is uttered, one AF frame 202 is added as illustrated in FIG. 7D.

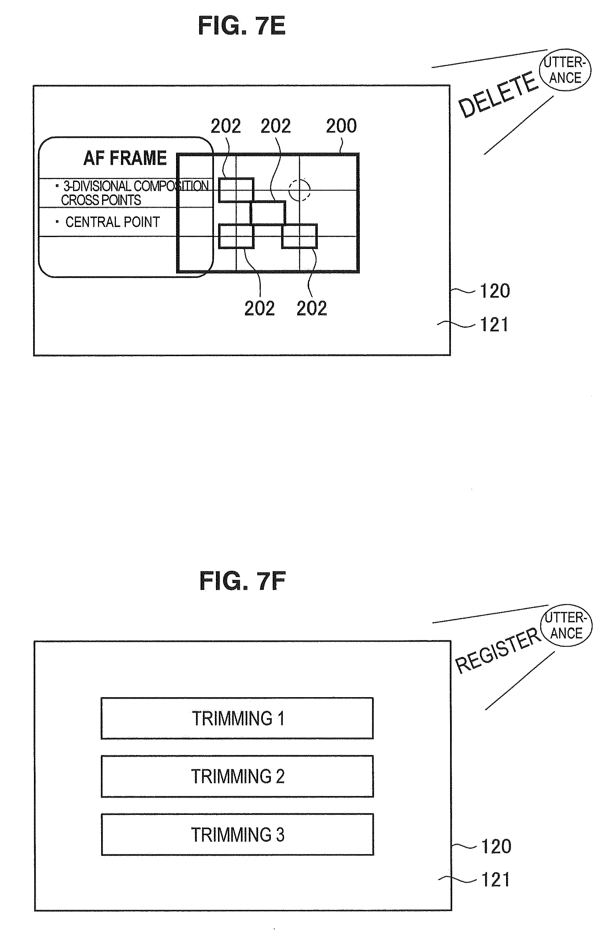

For deletion of the AF frame 202, when the user utters "delete," the mode of deleting the AF frame 202 is activated, and when a desired AF frame 202 is touched as illustrated in FIG. 7E, the AF frame 202 is deleted.

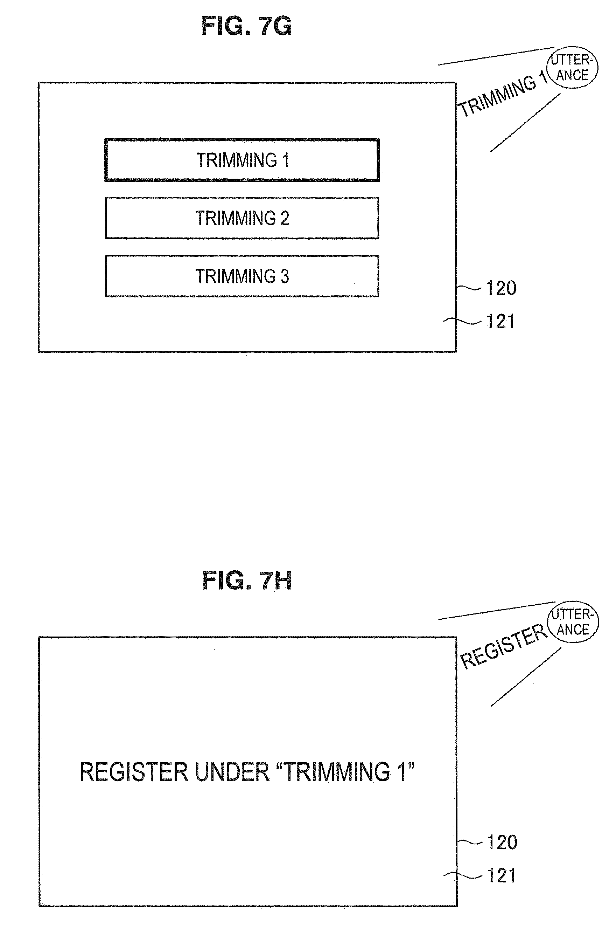

When a setting of the desired trimming frame 200 and the AF frame 202 ends, the user registers content thereof. At this time, the user utters "register." As a result, registration name candidates are displayed as illustrated in FIG. 7F. Then, when "trimming 1" among the registration name candidates is uttered as illustrated in FIG. 7G, "trimming 1" is selected as the registration name candidate. Then, when "confirm" is uttered as illustrated in FIG. 7H, the registration name "trimming 1" is registered.

### [2.2. Process according to second embodiment]

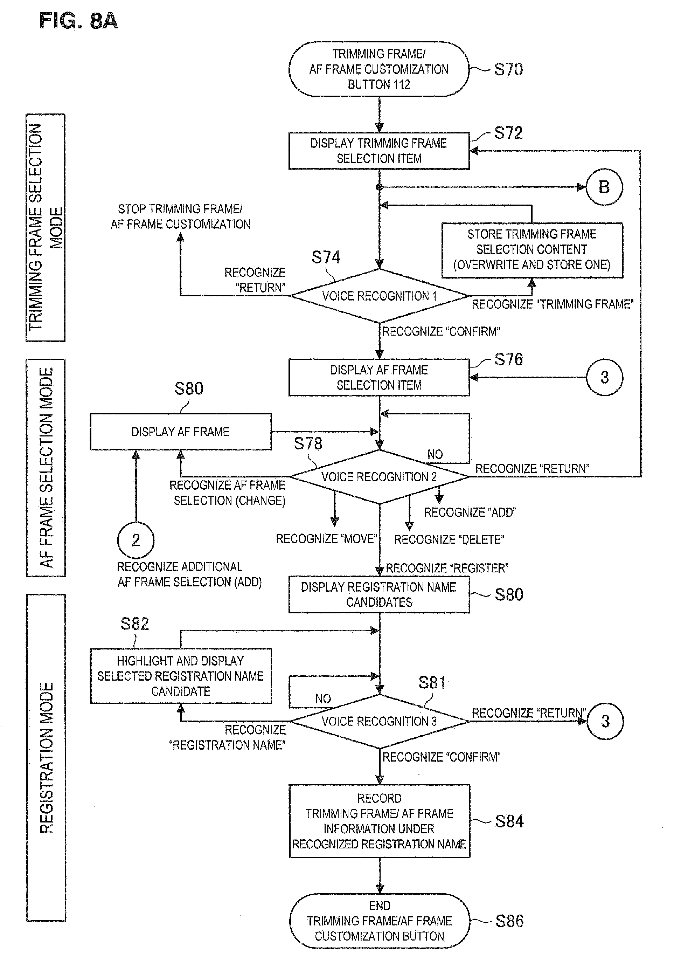

Next, a process according to the present embodiment will be described. FIGS. 8A to 8D are flowcharts illustrating a process according to the present embodiment. As illustrated in FIG. 8A, in step S70, the customization button 126 is pressed, and the process proceeds to the customization mode. In step S72, the trimming frame selection item is displayed. When it is determined in step S74 that a voice is recognized and the voice is recognized as saying "return," the customization process ends. Further, when a voice saying "trimming frame" is recognized and detected in step S74, one piece of selection content of the trimming frame is overwritten and stored in the memory 142. Further, when a voice saying "confirm" is recognized in step S74, the process proceeds to step S76. In step S76, the AF frame selection item is displayed.

After step S76, the process proceeds to step S78. When it is determined in step S78 that a voice is recognized and the voice is recognized as saying "return," the process returns to step S72. Further, when a voice for selecting the AF frame is recognized and detected in step S78, the process proceeds to step S80, and the AF frame is displayed. After step S80, the process returns to step S78.

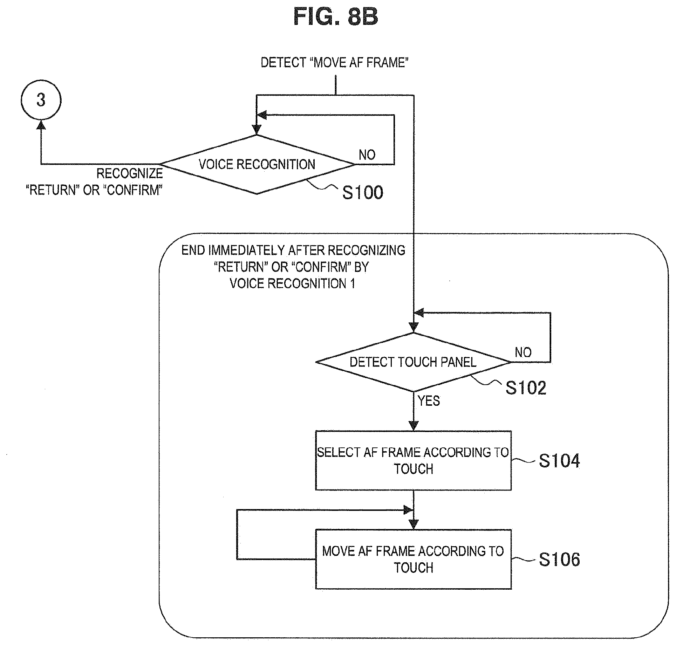

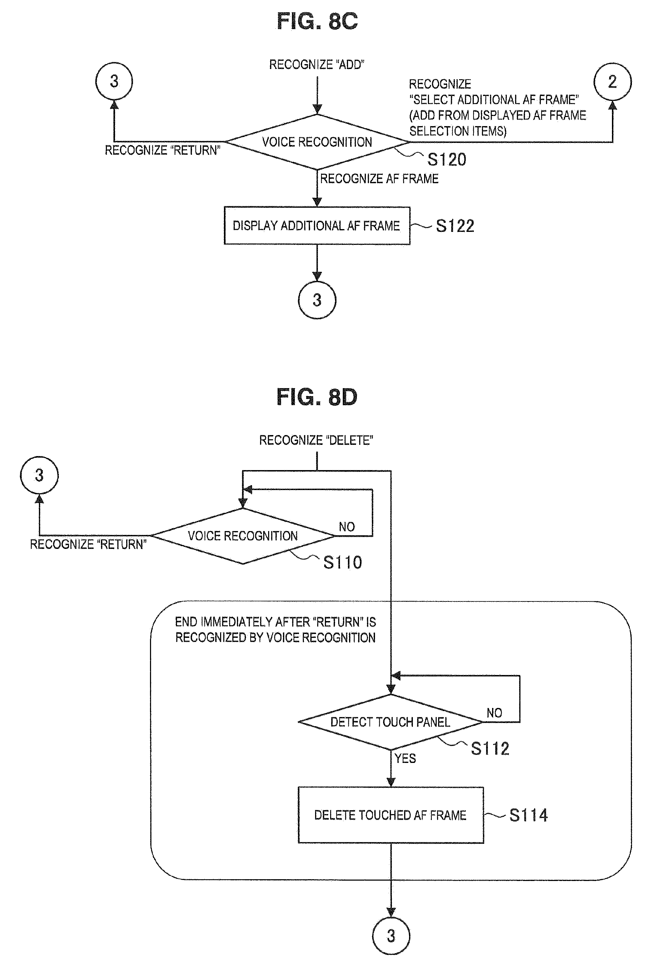

Further, when it is determined in step S78 that a voice saying "move" is recognized, a voice saying "delete" is recognized, or a voice saying "add" is recognized, the process of FIG. 8B, FIG. 8D, or FIG. 8C is performed.

When a voice saying "move" is recognized in step S78, the process proceeds to step S100 and step S102 of FIG. 8B. In a subsequent process, the voice recognition process of step S100 and the touch panel detection process of step S102 and subsequent steps are performed in parallel.

When an operation on the touch panel 121 is detected and an operation on the touch panel 121 is performed in step S102, the process proceeds to step S104. In step S104, the AF frame is selected according to an operation on the touch panel 121. Meanwhile, when an operation on the touch panel 121 is not performed in step S102, a standby operation is performed in step S102.

After step S104, the process proceeds to step S106. In step S106, the AF frame is moved according to an operation on the touch panel 121.

Further, in the process of step S102 to step S106, when a voice saying "return" or "confirm" is recognized in step S100, the process returns to step S76 of FIG. 8A.

When a voice saying "delete" is recognized in step S78, the process proceeds to step S110 and step S 112 of FIG. 8D. In a subsequent process, the voice recognition process of step S110 and the touch panel detection process of step S112 and subsequent steps are performed in parallel.

When an operation on the touch panel 121 is detected and an operation on the touch panel 121 is performed in step S112, the process proceeds to step S114. In step S 114, the selected AF frame is deleted according to an operation on the touch panel 121. After step S114, the process returns to step S76 of FIG. 8A.

Further, in the process of step S112 to step S114, when a voice saying "return" is recognized in step S100, the process returns to step S76 of FIG. 8A.

When a voice saying "add" is recognized in step S78, the process proceeds to step S120 of FIG. 8C. In step S120, voice recognition is performed, and when a voice saying "select additional AF frame" is recognized, the process proceeds to step S80 of FIG. 8A. Further, when a voice saying "return" is recognized in step S120, the process returns to step S76 of FIG. 8A.

Further, when a voice saying "AF frame" is recognized in step S120, the process proceeds to step S122. In step S122, an additional AF frame is displayed. After step S122, the process returns to step S76 of FIG. 8A.

When a voice saying "register" is recognized in step S78 of FIG. 8A, the process proceeds to step S80. In step S80, registration name candidates are displayed. In step S81, voice recognition is performed, and when a voice saying "return" is recognized, the process returns to step S76 of FIG. 8A. Further, when a voice saying "registration name" is recognized, the process proceeds to step S82, and a selected registration name candidate is highlighted and displayed. After step S82, the process returns to step S80. Further, when no voice has been recognized in step S80, a standby operation is performed in step S80.

Further, when a voice saying "confirm" is recognized in step S80, the process proceeds to step S84, and information of the trimming frame and the AF frame is recorded under the registered registration name. In step S86, the customizing of the trimming frame and the AF frame ends.

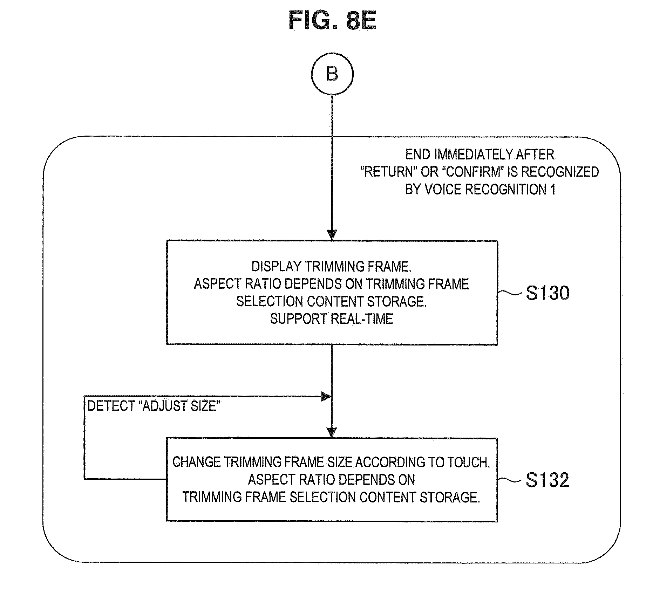

The process of step S74 and subsequent steps is performed in parallel with the process of step S130 and subsequent steps illustrated in FIG. 8E. In step S130, the trimming frame is displayed. The aspect ratio of the trimming frame is decided based on the selection content of the stored trimming frame. After step S130, the process proceeds to step S132. In step S132, the size of the trimming frame is changed according to an operation on the touch panel 121. In step S132, the aspect ratio of the trimming frame is decided based on the selection content of the stored trimming frame.

In steps S130 and S132, when a voice saying "return" or "confirm" is recognized in the voice recognition of step S74, the customization process ends.

As described above, according to the present embodiment, as the voice recognition and the touch panel operation are used together, the trimming frame and the AF frame can be easily set. Thus, the user can set the trimming frame and the AF frame by a simple operation.

### <3. Third embodiment>

Next, a third embodiment of the present disclosure will be described. The first and second embodiments have been described in connection with the operation performed in the digital camera 100. The third embodiment will now be described in connection with an example in which the trimming frame and the AF frame are customized and set by performing an operation on a PC.

Here, an operation performed in the digital camera 100 can be performed on a PC using a mouse using software for setting the trimming frame and the AF frame. Further, set content is stored under a decided registration name. Since a keyboard can be used in a PC, a degree of freedom of a setting of a registration name can be increased. For example, stored content may be written in a medium such as a CF card, the medium may be mounted in the main body of the digital camera 100, and data of the trimming frame and the AF frame are input to a digital camera.

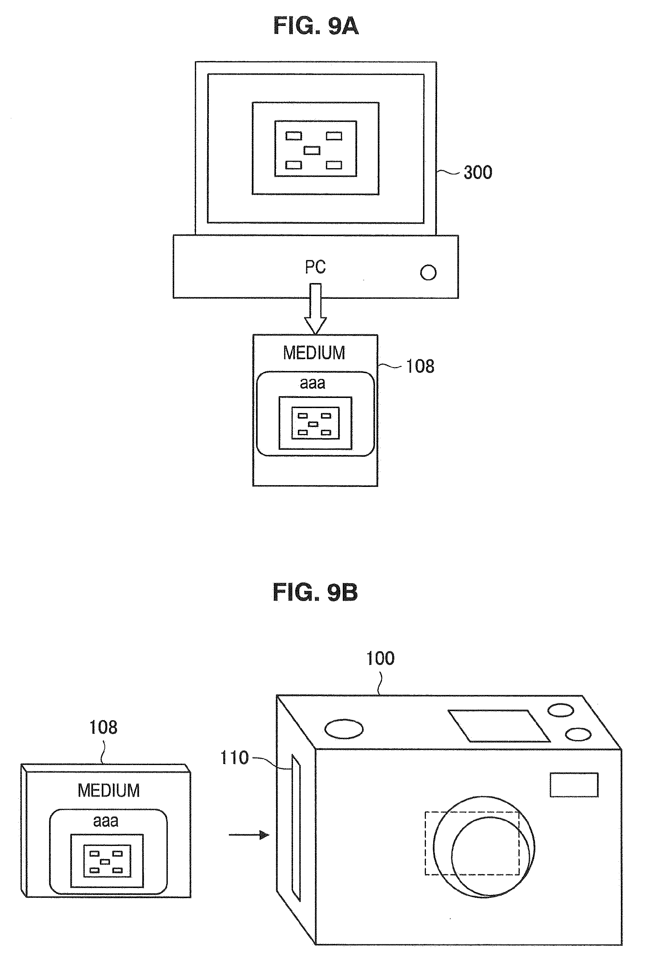

FIGS. 9A and 9B are schematic diagrams illustrating an exemplary configuration according to the third embodiment. A personal computer 300 illustrated in FIG. 9A includes the CPU 150 of FIG. 2 and relevant components. As illustrated in FIG. 9A, as the user operates the personal computer 300, information of the trimming frame and the AF frame is stored in the recording medium 108 inserted into the personal computer 300. The trimming frame and the AF frame are recorded in the recording medium 108 under a registration name "aaa."

As illustrated in FIG. 9B, the recording medium 108 in which the trimming frame, the AF frame, and the registration name are recorded is inserted into the insertion slot 110 of the digital camera 100 for the recording medium 108. The digital camera 100 reads the information recorded in the recording medium 110, acquires the trimming frame, the AF frame, and the registration name, and stores the trimming frame, the AF frame, and the registration name in a memory as customization content.

As described above, according to the present embodiment, the trimming frame and the AF frame can be set by performing an operation on the personal computer 300. Accordingly, the user inserts the recording medium recording the trimming frame and the AF frame set on the personal computer 300 into the digital camera 100 and then can set the trimming frame and the AF frame of the digital camera 100.

The preferred embodiments of the present invention have been described above with reference to the accompanying drawings, whilst the present invention is not limited to the above examples, of course. A person skilled in the art may find various alternations and modifications within the scope of the appended claims, and it should be understood that they will naturally come under the technical scope of the present invention.

Additionally, the present technology may also be configured as below.
(1) An image processing device including:
   an instruction input acquiring unit configured to acquire an instruction input by a user;
   a trimming frame setting unit configured to set a trimming frame used to trim an image based on the input instruction; and
   a detection frame setting unit configured to set a detection frame representing a range in which detection of the image is performed to the trimming frame.
(2) The image processing device according to (1),
   wherein the instruction input acquiring unit is an operation input unit that receives an operation performed by the user.
(3) The image processing device according to (2),
   wherein the instruction input acquiring unit includes a touch panel.
(4) The image processing device according to (3),
   wherein the trimming frame setting unit sets the trimming frame based on a multi-touch operation performed on the touch panel.
(5) The image processing device according to (1),
   wherein the instruction input acquiring unit is a voice input unit that receives a voice uttered by the user.
(6) The image processing device according to (1),
   wherein the detection frame setting unit automatically sets the detection frame to the trimming frame.
(7) The image processing device according to (1),
   wherein the detection frame setting unit controls the detection frame on the trimming frame based on the input instruction.
(8) The image processing device according to (1), further including:
   a display unit configured to display the trimming frame and the detection frame.
(9) The image processing device according to (1), further including:
   an image sensor configured to photograph the photographed image.
(10) The image processing device according to (1),
   wherein the trimming frame setting unit controls a size or a position of the trimming frame.
(11) The image processing device according to (1),
   wherein the detection frame setting unit performs a setting of a size or a position of the detection frame or addition or deletion of the detection frame.
(12) The image processing device according to (1),
   wherein the trimming frame setting unit sets an aspect ratio of the trimming frame to a predetermined aspect ratio.
(13) The image processing device according to (1), further including:
   a storage processing unit that causes the confirmed trimming frame and the detection frame to be stored in a storage unit.
(14) The image processing device according to (1),
   wherein the storage processing unit causes the confirmed trimming frame and the detection frame to be recorded together with a registration name.
(15) An image processing method including:
   acquiring an instruction input by a user;
   setting a trimming frame used to trim an image based on the input instruction; and
   setting a detection frame representing a range in which detection of the image is performed to the trimming frame.
(16) A computer readable recording medium recording a program causing a computer to execute:
   acquiring an instruction input by a user;
   setting a trimming frame used to trim an image based on the input instruction; and
   setting a detection frame representing a range in which detection of the image is performed to the trimming frame.

### Reference Signs List

- 100: digital camera
- 104: image sensor
- 108: recording medium
- 120: liquid crystal monitor
- 128: built-in microphone
- 144: customization memory
- 150: CPU
- 150a: trimming frame control unit
- 150b: AF frame control unit
- 150c: recording processing unit

## Claims

1. An image processing device comprising:
an instruction input acquiring unit configured to acquire an instruction input by a user;
a trimming frame setting unit configured to set a trimming frame used to trim an image based on the input instruction; and
a detection frame setting unit configured to set a detection frame representing a range in which detection of the image is performed to the trimming frame.

2. The image processing device according to claim 1,
wherein the instruction input acquiring unit is an operation input unit that receives an operation performed by the user.

3. The image processing device according to claim 2,
wherein the instruction input acquiring unit includes a touch panel.

4. The image processing device according to claim 3,
wherein the trimming frame setting unit sets the trimming frame based on a multi-touch operation performed on the touch panel.

5. The image processing device according to claim 1,
wherein the instruction input acquiring unit is a voice input unit that receives a voice uttered by the user.

6. The image processing device according to claim 1,
wherein the detection frame setting unit automatically sets the detection frame to the trimming frame.

7. The image processing device according to claim 1,
wherein the detection frame setting unit controls the detection frame on the trimming frame based on the input instruction.

8. The image processing device according to claim 1, further comprising:
a display unit configured to display the trimming frame and the detection frame.

9. The image processing device according to claim 1, further comprising:
an image sensor configured to photograph the photographed image.

10. The image processing device according to claim 1,
wherein the trimming frame setting unit controls a size or a position of the trimming frame.

11. The image processing device according to claim 1,
wherein the detection frame setting unit performs a setting of a size or a position of the detection frame or addition or deletion of the detection frame.

12. The image processing device according to claim 1,
wherein the trimming frame setting unit sets an aspect ratio of the trimming frame to a predetermined aspect ratio.

13. The image processing device according to claim 1, further comprising:
a storage processing unit that causes the confirmed trimming frame and the detection frame to be stored in a storage unit.

14. The image processing device according to claim 1,
wherein the storage processing unit causes the confirmed trimming frame and the detection frame to be recorded together with a registration name.

15. An image processing method comprising:
acquiring an instruction input by a user;
setting a trimming frame used to trim an image based on the input instruction; and
setting a detection frame representing a range in which detection of the image is performed to the trimming frame.

16. A computer readable recording medium recording a program causing a computer to execute:
acquiring an instruction input by a user;
setting a trimming frame used to trim an image based on the input instruction; and
setting a detection frame representing a range in which detection of the image is performed to the trimming frame.
